# DEMANDE DE BREVET EUROPEEN

(11) **EP 1 617 122 A2**
(43) Date de publication de la demande: **18.01.2006**
(21) Numéro de dépôt: 05014443.5
(22) Date de dépôt: 04.07.2005
(51) Int. Cl.: F16L 11/22, F16L 39/00, B60T 8/42, F15B 1/16

(54) **Ensemble de raccordement hydraulique, connecteur, dispositif comportant cet ensemble et ce connecteur et système de freinage comportant ce dispositif**

(30) Priorité: 08.07.2004 FR 0407669
(71) Demandeur: ROBERT BOSCH GMBH, 70442 Stuttgart (DE)
(72) Inventeur: Pasquet, Thierry, 93190 Livry Gargan (FR)
(74) Mandataire: Hurwic, Aleksander Wiktor

(57) **Abrégé**

Cet ensemble de raccordement (18) comprend des premier (24I) et second (24E) conduits de circulation de liquide de frein. Le premier conduit (241) est agencé à l'intérieur du second conduit (24E), de manière à délimiter radialement entre ces premier (241) et second (24E) conduits un canal annulaire de circulation de liquide de frein. Un connecteur mâle (20) est destiné à relier l'ensemble de raccordement (18) à un connecteur femelle. Ce connecteur mâle (20) comporte une partie centrale radialement, munie d'un perçage central de raccordement du premier conduit (24I) à un premier orifice du connecteur femelle, et une partie périphérique radialement, munie d'au moins un perçage périphérique de raccordement du second conduit (24E) à un second orifice du connecteur femelle.

Application au raccordement d'une source (13) de liquide de frein sous pression, comprenant deux pompes (14A, 14B) à piston, à un maître-cylindre (15) du système de freinage.

## Description

La présente invention concerne un ensemble de raccordement d'une source de liquide de frein sous pression à un maître-cylindre, un connecteur mâle destiné à relier cet ensemble de raccordement à un connecteur femelle, un dispositif de raccordement comportant cet ensemble de raccordement et ce connecteur mâle, et un système de freinage comportant ce dispositif de raccordement.

Il est connu d'équiper les systèmes de freinage de véhicules automobiles de dispositifs ABS (Anti-lock Braking System) ou ESP (Electronic Stability Program). Afin de pouvoir agir automatiquement sur le système de freinage du véhicule, un dispositif ABS ou ESP comprend une source de liquide de frein sous pression raccordée à un maître-cylindre de ce système de freinage. La source de liquide de frein comporte par exemple des première et seconde pompes du type à piston.

Pour raccorder la source de liquide de frein sous pression au maître-cylindre, on connaît déjà dans l'état de la technique un ensemble de raccordement d'une source de liquide de frein sous pression à un maître-cylindre, du type comprenant des premier et second conduits de circulation de liquide de frein.

Ces premier et second conduits de circulation de liquide de frein raccordent respectivement les première et seconde pompes au maître-cylindre.

Ces première et seconde pompes à piston sont ainsi raccordées en parallèle au maître-cylindre, et refoulent alternativement du liquide de frein au maître-cylindre, les pistons de ces pompes ayant des courses déphasées, en général d'une demi-période.

Les première et seconde pompes à piston refoulent donc le liquide de frein par à-coups du fait des courses déphasées des pistons. Ces à-coups provoquent des ondes se propageant dans les premier et second conduits et créant des pulsations dans le maître-cylindre.

L'invention a notamment pour but de réduire, voire de supprimer, les pulsations transmises au maître-cylindre par les pompes.

A cet effet, l'invention a pour objet un ensemble de raccordement d'une source de liquide de frein sous pression à un maître-cylindre, du type comprenant des premier et second conduits de circulation de liquide de frein, caractérisé en ce que le premier conduit est agencé à l'intérieur du second conduit, de manière à délimiter radialement entre ces premier et second conduits un canal annulaire de circulation de liquide de frein.

Les premier et second conduits ainsi agencés permettent aux ondes se propageant dans chacun de ces conduits de se compenser entre elles, et ainsi de s'atténuer au fur et à mesure de leur propagation dans leur conduit respectif, de manière à déboucher dans le maître-cylindre avec une amplitude faible, réduisant ainsi les pulsations subies par le maître-cylindre.

Par ailleurs, un tel agencement des premier et second conduits simplifie leur mise en place dans un compartiment moteur.

Un ensemble dé raccordement selon l'invention peut en outre comporter l'une ou plusieurs des caractéristiques suivantes :
- le premier conduit délimite un canal ayant une même section d'écoulement du liquide de frein que le canal délimité radialement entre les premier et second conduits ;
- les premier et second conduits comprennent des parois en matériau absorbant les ondes se propageant dans le liquide de frein, par exemple en matériau élastomère, munies chacune d'une armature interne de préférence en fil de Nylon tressé.

L'invention a également pour objet un connecteur mâle destiné à relier un ensemble de raccordement selon l'invention à un connecteur femelle, caractérisé en ce qu'il comporte :
- une partie centrale radialement, munie d'un perçage central de raccordement du premier conduit à un premier orifice du connecteur femelle ; et
- une partie périphérique radialement, munie d'au moins un perçage périphérique de raccordement du second conduit à un second orifice du connecteur femelle.

Un connecteur mâle selon l'invention peut en outre comporter l'une ou plusieurs des caractéristiques suivantes :
- la partie centrale est rapportée dans la partie périphérique ;
- le connecteur mâle comporte des moyens d'accrochage du premier conduit par pincement de ce premier conduit entre deux surfaces coaxiales ménagées respectivement sur les parties centrale et périphérique ;
- la surface de pincement du premier conduit ménagée sur la partie centrale comporte des saillies, formant par exemple un filet en hélice ;
- la surface de pincement du premier conduit ménagée sur la partie périphérique est délimitée par une paroi annulaire de cette partie périphérique, dans laquelle sont ménagés des reliefs, ces reliefs étant saillant radialement vers le centre du connecteur mâle ;
- le connecteur mâle comporte des moyens d'accrochage du second conduit par pincement de ce second conduit entre deux surfaces coaxiales ménagées respectivement sur la partie périphérique et une bague rapportée sur cette partie périphérique ;
- des reliefs, saillants radialement vers le centre du connecteur, sont ménagés sur la bague rapportée sur la partie périphérique ;
- plusieurs perçages périphériques sont ménagés dans la partie périphérique, ces perçages périphériques étant répartis en cercle autour de l'axe de la partie périphérique ;
- la partie périphérique comporte un filetage destiné à coopérer par vissage avec un filetage complémentaire du connecteur femelle.

L'invention a encore pour objet un dispositif de raccordement d'une source de liquide de frein sous pression à un maître-cylindre, caractérisé en ce qu'il comporte un ensemble de raccordement selon l'invention.

De manière optionnelle, un dispositif de raccordement selon l'invention comporte au moins un connecteur mâle selon l'invention.

L'invention a enfin pour objet un système de freinage, du type comprenant une source de liquide de frein sous pression, un maître-cylindre et un dispositif de raccordement de la source de liquide de frein au maître-cylindre, caractérisé en ce que le dispositif de raccordement est un dispositif de raccordement du type précité.

Un système de freinage selon l'invention peut en outre comporter l'une ou plusieurs des caractéristiques suivantes :
- les pompes sont du type à piston, les pistons des pompes ayant des courses déphasées, notamment d'une demi-période ;
- le maître-cylindre est un maître-cylindre tandem.

L'invention sera mieux comprise à la lecture de la description qui va suivre, donnée uniquement à titre d'exemple et faite en se référant aux dessins annexés dans lesquels :
- la figure 1 est une vue schématique d'un système de freinage selon l'invention ;
- la figure 2 est une vue en coupe axiale d'un connecteur mâle selon l'invention, reliant un ensemble de raccordement selon l'invention à un connecteur femelle.

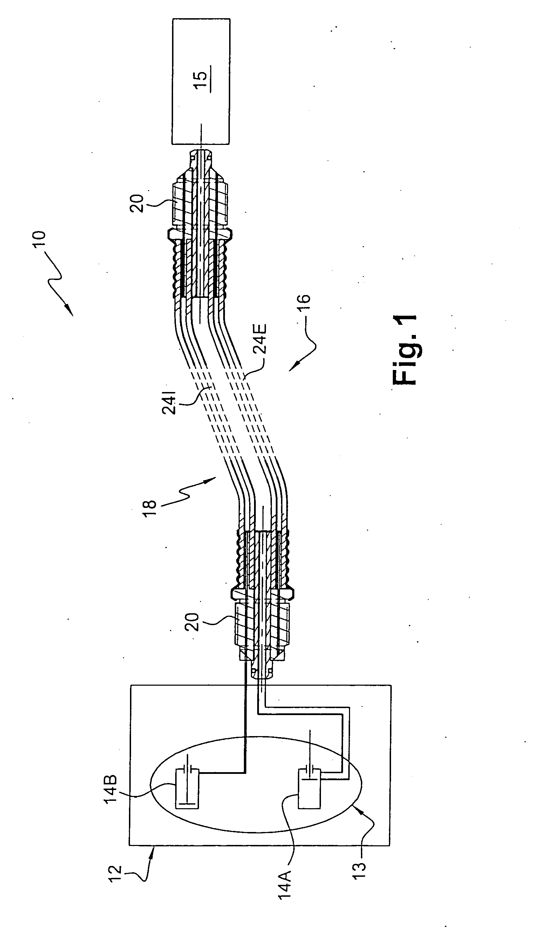

On a représenté sur la figure 1 un système de freinage pour véhicule automobile, désigné par la référence générale 10. Ce système de freinage comporte un groupe hydraulique 12 comprenant une source 13 de liquide de frein sous pression.

Cette source 13 de liquide de frein sous pression comporte des première 14A et seconde 14B pompes, de type à piston. Les pistons de ces pompes 14A, 14B ont des courses déphasées l'une par rapport à l'autre, notamment d'une demi période.

Le groupe hydraulique 12 est raccordé à un maître-cylindre 15, de préférence du type tandem, par l'intermédiaire d'un dispositif de raccordement 16.

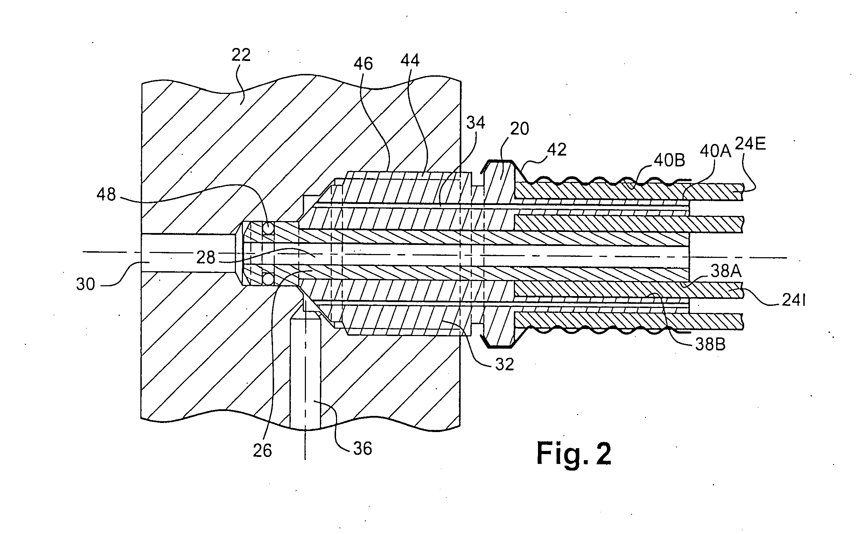

Ce dispositif de raccordement 16 comporte un ensemble de raccordement 18 et deux connecteurs mâles 20, chacun destiné à relier cet ensemble de raccordement 18 à un connecteur femelle 22 comme cela est représenté sur la figure 2.

L'ensemble de raccordement 18 comprend des premier 24l et second 24E conduits de circulation de liquide de frein, raccordés respectivement aux première 14A et seconde 14B pompes à piston.

Le premier conduit 24l est agencé à l'intérieur du second conduit 24E de manière à délimiter radialement entre ces premier 24l et second 24E conduits un canal annulaire de circulation de liquide de frein.

De préférence, le premier conduit 24l délimite un canal ayant une même section d'écoulement du liquide de frein que le canal délimité radialement entre les premier 24l et second 24E conduits.

Afin d'assurer une absorption optimale des ondes provoquées par les pompes à piston 14A, 14B et se propageant dans le liquide de frein, les premier 24l et second 24E conduits comprennent des parois en matériaux susceptibles d'absorber ces ondes. Par exemple, les parois des premier 24l et second 24E conduits sont en matériau élastomère, munies chacune d'une armature interne, de préférence en fil de nylon tressé.

Les premier 24l et second 24E conduits sont respectivement reliés aux première 14A et seconde 14B pompes par l'intermédiaire d'un des connecteurs mâles 20, illustré plus en détail sur la figure 2.

Ce connecteur mâle 20 comporte une partie centrale 26, munie d'un perçage central 28 de raccordement du premier conduit 24l à un premier orifice 30 du connecteur femelle 22. Cet orifice 30 est raccordé à la première pompe 14A du groupe hydraulique 12.

Le connecteur mâle 20 comporte en outre une partie périphérique radiale 32, munie d'une pluralité de perçages périphériques 34 de raccordement du second conduit 24E à un second orifice 36 du connecteur femelle 22. Le second orifice 36 est raccordé à la seconde pompe 14B du groupe hydraulique 12.

Ces perçages périphériques 34 sont répartis en cercle, autour de l'axe de la partie périphérique, et sont en nombre suffisant pour assurer un débit de liquide de frein équivalent au débit de liquide de frein passant par le perçage 28 de la partie centrale 26.

Dans l'exemple décrit, la partie centrale 26 du connecteur mâle 20 est rapportée dans sa partie périphérique 32.

Le premier conduit 24l est accroché au connecteur mâle 20 par pincement de ce premier conduit 24l entre deux surfaces 38A et 38B ménagées respectivement sur les parties centrale 26 et périphérique 32.

Afin de faciliter le maintien du conduit 24l sur la partie centrale 26, la surface de pincement 38A ménagé sur cette partie centrale 26 comporte des saillies (non représentées), formant par exemple un filet en hélice.

La surface de pincement 38B, ménagée sur la partie périphérique, est délimitée par une paroi annulaire de cette partie périphérique 32. Des reliefs saillants radialement vers le centre du connecteur mâle 20 sont ménagés dans cette partie annulaire de la partie périphérique 32, afin d'assurer un maintien efficace du premier conduit 24l sur la partie centrale 26.

Le connecteur mâle 20 comporte en outre des moyens d'accrochage du second conduit 24E par pincement de ce second conduit 24E entre deux surfaces coaxiales 40A et 40B, ménagées respectivement sur la partie périphérique 32 et sur une bague 42 rapportée sur cette partie périphérique 32.

On notera que des reliefs saillants radialement vers le centre du connecteur mâle 20 sont ménagés sur la bague 42, afin d'assurer un maintien efficace du conduit 24E sur la partie périphérique 32.

Par ailleurs, le connecteur mâle 20 comporte sur sa partie périphérique 32 un filetage 44 destiné à coopérer par vissage avec un filetage 46 complémentaire du connecteur femelle 22, afin d'assurer le bon maintien du connecteur mâle 20 dans le connecteur femelle 22.

En outre, on prévoit des moyens d'étanchéité 48, notamment pour isoler entre eux les premier 30 et second 36 orifices raccordés respectivement aux première et seconde pompes. Ces moyens d'étanchéité 48 comprennent notamment un joint torique intercalé entre des surfaces complémentaires interne et externe délimitant respectivement le connecteur femelle 22 et la partie centrale 26 du connecteur mâle 20.

## Revendications

1. Ensemble de raccordement (18) d'une source (13) de liquide de frein sous pression à un maître-cylindre (15), du type comprenant des premier (24l) et second (24E) conduits de circulation de liquide de frein, **caractérisé en ce que** le premier conduit (24l) est agencé à l'intérieur du second conduit (24E), de manière à délimiter radialement entre ces premier (24l) et second (24E) conduits un canal annulaire de circulation de liquide de frein.

2. Ensemble de raccordement (18) selon la revendication 1, **caractérisé en ce que** le premier conduit (24l) délimite un canal ayant une même section d'écoulement du liquide de frein que le canal délimité radialement entre les premier (24l) et second (24E) conduits.

3. Ensemble de raccordement (18) selon la revendication 1 ou 2, **caractérisé en ce que** les premier (24l) et second (24E) conduits comprennent des parois en matériau absorbant les ondes se propageant dans le liquide de frein, par exemple en matériau élastomère, munies chacune d'une armature interne de préférence en fil de Nylon tressé.

4. Connecteur mâle (20) destiné à relier un ensemble de raccordement (18) selon l'une quelconque des revendications précédentes à un connecteur femelle (22), **caractérisé en ce qu'**il comporte :
- une partie centrale radialement (26), munie d'un perçage central (28) de raccordement du premier conduit (24l) à un premier orifice (30) du connecteur femelle (22) ; et
- une partie périphérique radialement (32), munie d'au moins un perçage périphérique (34) de raccordement du second conduit (24E) à un second orifice (36) du connecteur femelle (22).

5. Connecteur mâle (20) selon la revendication 4, **caractérisé en ce que** la partie centrale (26) est rapportée dans la partie périphérique (32).

6. Connecteur mâle (20) selon la revendication 4 ou 5, **caractérisé en ce qu'**il comporte des moyens d'accrochage du premier conduit (24l) par pincement de ce premier conduit (24l) entre deux surfaces coaxiales (38A, 38B) ménagées respectivement sur les parties centrale (26) et périphérique (32).

7. Connecteur mâle (20) selon la revendication 6, **caractérisé en ce que** la surface (38A) de pincement du premier conduit (24l) ménagée sur la partie centrale (26) comporte des saillies, formant par exemple un filet en hélice.

8. Connecteur mâle (20) selon la revendication 6 ou 7, **caractérisé en ce que** la surface (38B) de pincement du premier conduit (24l) ménagée sur la partie périphérique (32) est délimitée par une paroi annulaire de cette partie périphérique (32), dans laquelle sont ménagés des reliefs, ces reliefs étant saillant radialement vers le centre du connecteur mâle (20).

9. Connecteur mâle (20) selon l'une quelconque des revendications 4 à 8, **caractérisé en ce qu'**il comporte des moyens d'accrochage du second conduit (24E) par pincement de ce second conduit (24E) entre deux surfaces coaxiales (40A, 40B) ménagées respectivement sur la partie périphérique (32) et une bague (42) rapportée sur cette partie périphérique (32).

10. Connecteur mâle (20) selon la revendication 9, **caractérisé en ce que** des reliefs, saillants radialement vers le centre du connecteur (20), sont ménagés sur la bague (42) rapportée sur la partie périphérique (32).

11. Connecteur mâle (20) selon l'une quelconque des revendications 4 à 10, **caractérisé en ce que** plusieurs perçages périphériques (34) sont ménagés dans la partie périphérique (32), ces perçages périphériques (34) étant répartis en cercle autour de l'axe de la partie périphérique (32).

12. Connecteur mâle (20) selon l'une quelconque des revendications 4 à 11, **caractérisé en ce que** la partie périphérique (32) comporte un filetage (44) destiné à coopérer par vissage avec un filetage (46) complémentaire du connecteur femelle (22).

13. Dispositif de raccordement (16) d'une source (13) de liquide de frein sous pression à un maître-cylindre (15), **caractérisé en ce qu'**il comporte un ensemble de raccordement (18) selon l'une quelconque des revendications 1 à 3.

14. Dispositif de raccordement (16) selon la revendication 13,**caractérisé en ce qu'**il comporte au moins un connecteur mâle (20) selon l'une quelconque des revendications 4 à 12.

15. Système de freinage (10), du type comprenant une source (13) de liquide de frein sous pression, un maître-cylindre (15) et un dispositif de raccordement (16) de la source (13) de liquide de frein au maître-cylindre (15), **caractérisé en ce que** le dispositif de raccordement (16) est selon la revendication 13 ou 14.

16. Système de freinage (10) selon la revendication 15, **caractérisé en ce que** la source (13) de liquide de frein sous pression comporte des première (14A) et seconde (14B) pompes, raccordées respectivement aux premier (24l) et second (24E) conduits.

17. Système de freinage (10) selon la revendication 16, **caractérisé en ce que** les pompes (14A, 14B) sont du type à piston, les pistons des pompes (14A, 14B) ayant des courses déphasées, notamment d'une demi-période.

18. Système de freinage (10) selon l'une quelconque des revendications 15 à 17, **caractérisé en ce que** le maître-cylindre (15) est un maître-cylindre tandem.
